# EUROPÄISCHE PATENTSCHRIFT

(11) **EP 3 714 118 B1**
(45) Veröffentlichungstag und Bekanntmachung des Hinweises auf die Patenterteilung: **01.01.2025**
(21) Anmeldenummer: 18807065.0
(22) Anmeldetag: 20.11.2018
(51) Int. Cl.: E04G 7/30, E04G 1/06, F16B 7/04

(54) **GERÜSTSTIEL, BAUGERÜST UND VERFAHREN ZUR HERSTELLUNG EINES GERÜSTSTIELS**
SCAFFOLDING POST, SCAFFOLDING AND METHOD FOR PRODUCING A SCAFFOLDING POST
MONTANT D'ÉCHAFAUDAGE, ÉCHAFAUDAGE DE CONSTRUCTION ET PROCÉDÉ DE FABRICATION D'UN MONTANT D'ÉCHAFAUDAGE

(30) Priorität: 20.11.2017 DE 102017220696
(43) Veröffentlichungstag der Anmeldung: 30.09.2020
(73) Patentinhaber: PERI SE, 89264 Weißenhorn (DE)
(72) Erfinder: MIKIC, Erzad, 76185 Karlsruhe (DE)
(74) Vertreter: K & H Bonapat Patentanwälte Koch · von Behren & Partner mbB
(86) Internationale Anmeldenummer: PCT/EP2018/081862
(87) Internationale Veröffentlichungsnummer: WO 2019/097072

(56) Entgegenhaltungen:
- EP-A2- 2 390 439
- EP-A2- 2 628 872
- DE-A1- 102013 108 326
- DE-A1- 102016 204 694
- FR-A1- 2 449 763
- GB-A- 1 006 952

## Beschreibung

Die Erfindung betrifft einen Gerüststiel für ein Baugerüst. Die Erfindung betrifft weiterhin ein Baugerüst mit einem solchen Gerüststiel. Die Erfindung betrifft weiterhin ein Verfahren zur Herstellung eines Gerüststiels.

Es ist bekannt, aufeinander gesteckte Rohre zum Abtragen vertikaler Lasten in Baugerüsten einzusetzen. Derlei Gerüststiele sind aus der DE 20 2007 019 073 U1, der DE 101 12 370 A1, der DE 10 2013 108 326 A1, der FR 2 612 999 A1, der BE 1011106 A3 und der WO 2012/136198 A1 bekannt geworden. Die zitierten Druckschriften zeigen Gerüststiele, bei denen ein Rohr einstückig, d. h. einteilig, mit einem Einsteckzapfen ausgebildet ist. Es hat sich jedoch gezeigt, dass die einteilige Ausbildung von Einsteckzapfen und Rohr einen hohen Fertigungsaufwand mit sich bringt. Werden demgegenüber Rohr und Einsteckzapfen nicht einteilig miteinander ausgebildet, so stoßen bei aufeinander aufgesteckten Gerüststielen die Stirnseiten der Rohre der Gerüststiele aneinander, wobei die Stirnseiten der Rohre nur eine geringe Kontaktfläche aufweisen. Diese geringe Kontaktfläche begrenzt die Tragfähigkeit eines Baugerüsts mit solchen Gerüststielen maßgeblich.

In FR 2 449 763 A1 ist ein Verbinder für zwei Steigrohre beschrieben, wobei das obere Steigrohr zwei kleine Platten aufweist, die an der Innenseite seines unteren Endes angeschweißt sind, während das untere Steigrohr ein quadratisches Verbindungsstück an der Innenseite angeschweißt hat. Der Verbinder hat Löcher in sein unteres Ende über zwei gegenüberliegende Ecken in einer Höhe geschnitten, die zum Aufnehmen von Platten geeignet ist. Wenn ein Steigrohr auf das andere gelegt wird, gleitet der Verbinder durch die Platten, wenn er quadratisch zu ihnen ist, und wenn die Steigrohre gegeneinander gedreht werden, greifen die Platten in die Löcher im Verbinder ein, wodurch die Steigrohre miteinander verriegelt werden. Das Dokument offenbart einen Gerüststiel gemäß dem Oberbegriff des Anspruchs 1.

In GB 1 006 952 A ist eine Verbindung zum Verbinden eines Paares von Rohren offenbart, die einen Zapfenabschnitt umfasst, der an dem einen Rohr befestigt ist und mit mindestens einer Aussparung in seiner Verlängerungsfläche ausgebildet ist, wobei das andere Rohr mindestens einen nach innen verlaufenden Vorsprung aufweist. Die Anordnung ist so ausgeführt, dass die Verbindung zusammengesetzt werden kann, indem der Zapfenabschnitt in das andere Rohr eingeführt wird, wobei die Aussparung nicht mit dem Vorsprung ausgerichtet ist, und dann ein Rohr relativ zum anderen gedreht wird, so dass der Vorsprung in die Aussparung eintritt. Die sich nach innen erstreckenden Vorsprünge auf dem anderen Rohr werden durch das Material gebildet, das zwischen dem Umfang einer am Ende des Rohrs befestigten Platte und den vier Kanten einer in die Platte geschnittenen quadratischen Öffnung liegt. In DE 10 2010 021 623 A1 ist ein Modulgerüst beschrieben, bestehend aus wenigstens einem länglichen Vertikalstiel aus je einem Metallrohr oder einem anderen Hohlprofil, in dessen eines Ende je ein hohles Kupplungsprofil eingesteckt ist, dessen Außenfläche zumindest teilweise auf der Innenfläche des Vertikalstiels aufliegt und das durch Verbindungen mit dem Vertikalstiel verbunden ist, wobei die Verbindung die durchgehende Fläche des Vertikalstiels unterbricht und auf jeden Vertikalstiel wenigstens eine scheibenförmige Anschlussscheibe mit einer in Ihrer Mitte angeordneten Mittenöffnung aufgeschoben und befestigt ist und die beiden großen Scheibenflächen jeweils von den beiden Schenkeln wenigstens eines, etwa gabelförmigen Rohrriegelanschlusses umfasst werden, der mit einem etwa horizontal verlaufenden Rohrriegel verbunden ist und jeweils ein Keil durch je eine Keilöffnung in den Schenkeln sowie je einer Randöffnung in den Anschlussscheiben hindurch gesteckt ist. Aus der DE 10 2012 202 258 A1 ist ein Vertikalstiel eines Gerüstes bekannt, der zumindest zwei miteinander verbundene oder miteinander verbindbare Rohre umfasst, die mithilfe eines Rohrs mit kleinem Durchmesser ineinander gesteckt sind, wobei ein Verstärkungsrohr oder einen Verstärkungsstab für eine Verstärkung des Rohrs mit kleinem Durchmesser vorhanden ist.

Aus der DE 692 88 08 U ist ein Gerüststiel bekannt geworden, der zur verbesserten Lastabtragung vorschlägt, ein Anschluss-Rohrstück starr mit dem Rohr des Gerüststiels zu verbinden. Weiterhin ist aus der CH 671 814 A5 ein Gerüststiel mit einem Rohr und einer Einführhülse bekannt geworden, die die Ausrichtung aufeinander aufstehender Rohre eines Baugerüsts verbessert. Zwar offenbaren die in der DE 692 88 08 U und CH 671 814 A5 offenbarten Gerüststiele eine höhere Lastabtragungsfähigkeit, diese höhere Lastabtragungsfähigkeit führt jedoch wiederum zu einem hohen Fertigungsaufwand für den Gerüststiel.

Aufgabe der vorliegenden Erfindung ist es daher, einen Gerüststiel für ein Baugerüst bereitzustellen, der sowohl hohe Vertikallasten abtragen kann als auch kostenoptimiert herstellbar ist. Weiterhin ist es Aufgabe der Erfindung, ein Baugerüst mit einem solchen Gerüststiel bereitzustellen. Weiterhin ist es Aufgabe der Erfindung, ein Verfahren zur Herstellung eines Gerüststiels bereitzustellen.

Die Aufgabe wird erfindungsgemäß durch einen Gerüststiel gemäß Patentanspruch 1, ein Baugerüst gemäß Patentanspruch 9 und ein Verfahren gemäß Patentanspruch 10 gelöst. Die abhängigen Patentansprüche geben bevorzugte Weiterbildungen wieder.

Die erfindungsgemäße Aufgabe wird somit gelöst durch einen Gerüststiel für ein Baugerüst, wobei der Gerüststiel Folgendes aufweist:
a) ein Rohr;
b) einen Einsteckzapfen (Stoßbolzen, Rohrzapfen), der an einem ersten axialen Ende des Rohres abschnittsweise axial in das Rohr eingeführt und im Rohr starr befestigt ist;
c) einen Aufnahmeabschnitt am zweiten axialen Ende des Rohres, das dem ersten axialen Ende des Rohres gegenüberliegt, wobei der Innendurchmesser des Aufnahmeabschnitts größer ist als der Außendurchmesser des Einsteckzapfens, um den Einsteckzapfen in einen insbesondere oben, angrenzenden Gerüststiel mit identischem Aufnahmeabschnitt einstecken zu können;

wobei die Stirnseite des Rohres am ersten axialen Ende eine Anlageschulter, insbesondere eine ringförmige Anlageschulter, für einen vertikal angrenzenden Gerüststiel bildet,
und wobei die Rohrwand des Rohres im Bereich der Anlageschulter zumindest teilweise zum Einsteckzapfen hin ausgebildet ist, um eine große Anlagefläche für den Aufnahmeabschnitt des angrenzenden Gerüststiels zu bilden.

Erfindungsgemäß ist es vorgesehen, Rohr und Einsteckzapfen nicht einteilig auszubilden, sodass der Gerüststiel kosteneffektiv herstellbar ist. Um dennoch eine große Kontaktfläche für einen, insbesondere darüber, angeordneten Gerüststiel zu bieten, ist die Rohrwand des Rohres zur Ausbildung einer großen Anlageschulter am ersten axialen Ende des Rohres so bearbeitet, dass sie sich zumindest teilweise zum Einsteckzapfen hin, d. h. radial nach innen, erstreckt.

Die Anlageschulter kann am Einsteckzapfen anliegen oder, bevorzugt, mit ihrem freien Ende radial beabstandet zum Einsteckzapfen ausgebildet sein.

In erfindungsgemäßer Ausgestaltung des Gerüststiels ist die Rohrwand im Bereich der Anlageschulter zum Einsteckzapfen hin verbreitert, wobei die Rohrwand an dem axial stirnseitigen Ende des Rohres eine zu der übrigen Rohrwand vergrößerte Rohrwandstärke aufweist. Mit anderen Worten weist die Rohrwand in diesem Fall an ihrem stirnseitigen freien Ende eine vergrößerte Rohrwandstärke auf.

Der Gerüststiel ist besonders kosteneffektiv fertigbar, wenn die Rohrwand im Bereich der Anlageschulter axial gestaucht ist.

Besonders bevorzugt weist die Rohrwand überwiegend eine Rohrwandstärke von 2,7 mm oder 2,9 mm auf. Alternativ oder zusätzlich dazu kann die Rohrwand im Bereich der Anlageschulter, insbesondere an ihrem stirnseitigen freien Ende, eine Rohrwandstärke von mehr als 3,2 mm, insbesondere von mehr als 3,4 mm, aufweisen.

Alternativ oder zusätzlich dazu kann die Rohrwand überwiegend eine Rohrwandstärke zwischen 2,0 mm und 2,6 mm aufweisen (die angegebenen Randwerte eingeschlossen). Im Bereich der Anlageschulter kann die Rohrwand eine Rohrwandstärke zwischen 120% und 130% der überwiegenden Rohrwandstärke (die angegebenen Randwerte eingeschlossen) aufweist. Im Bereich der Anlageschulter weist die Rohrwand in diesen Fällen eine 20% bis 30% größere Rohrwandstärke auf.

In weiter bevorzugter Ausgestaltung der Erfindung weist das Rohr im ersten axialen Bereich einen gleichbleibenden Außendurchmesser auf. Weiter bevorzugt kann das Rohr über seine gesamte axiale Länge denselben Außendurchmesser aufweisen. Der Außendurchmesser des Rohres beträgt bevorzugt 48,3 mm.

Der Einsteckzapfen ist starr im Rohr befestigt. Vorzugsweise ist der Gerüststiel durch eine Verformung unbewegbar im Rohr befestigt. Die Verformung kann punktförmig ausgebildet sein. Vorzugsweise sind mehrere, insbesondere punktförmige, Verformungen vorgesehen, um den Einsteckzapfenfest im Rohr anzuordnen. Die Verformungen sind dabei vorzugsweise gleich ausgebildet.

Zusätzlich zu der Anlageschulter am ersten axialen Ende des Rohres kann das Rohr am zweiten axialen Ende eine, insbesondere ringförmige, Anlagefläche für eine Anlageschulter eines, insbesondere unten, angrenzenden Gerüststiels aufweisen, wobei die Rohrwand des Rohres im Bereich der Anlagefläche am zweiten axialen Ende des Rohres zumindest teilweise radial nach innen ausgebildet ist. Hierdurch liegen übereinander angeordnete Rohre eines Baugerüsts sicher und mit großer Kontaktfläche aneinander an.

Die Rohrwand kann im Bereich der Anlagefläche axial gestaucht sein. Im Bereich der Anlagefläche kann die Rohrwandstärke mehr als 3,2 mm, insbesondere mehr als 3,4 mm, aufweisen. Besonders bevorzugt ist das zweite axiale Ende des Rohres spiegelbildlich zum ersten axialen Ende des Rohres ausgebildet.

Die erfindungsgemäße Aufgabe wird weiterhin gelöst durch ein Baugerüst mit mehreren zuvor beschriebenen Gerüststielen, wobei ein Einsteckzapfen eines ersten Gerüststiels teilweise in einen Aufnahmeabschnitt eines zweiten Gerüststiels eingesteckt ist.

Die erfindungsgemäße Aufgabe wird weiterhin gelöst durch ein Verfahren gemäß Anspruch 10 zur

Herstellung eines Gerüststiels gemäß Ansprüchen 1 bis 8, zur Herstellung eines zuvor beschriebenen Gerüststiels, wobei das Verfahren folgende Verfahrensschritte aufweist:
A) Ausbilden einer radial nach innen gerichteten Anlageschulter am ersten axialen Ende eines Rohres, wobei die Rohrwand an dem axial stirnseitigen Ende des Rohres eine zu der übrigen Rohrwand vergrößerte Rohrwandstärke aufweist;
B) Festes Anordnen eines Einsteckzapfens in das Rohr im Bereich des ersten axialen Endes.

Vor, nach und/oder zwischen den Verfahrensschritten A) und B) kann/können ein weiterer Verfahrensschritt/weitere Verfahrensschritte vorgesehen sein.

Bevorzugt wird beim Verfahrensschritt A) die Ausbildung einer radial nach innen gerichteten Anlageschulter mittels eines axialen Stauchens des freien Endes des Rohres durchgeführt.

Weitere Merkmale und Vorteile der Erfindung ergeben sich aus der nachfolgenden detaillierten Beschreibung mehrerer Ausführungsbeispiele der Erfindung, aus den Patentansprüchen sowie anhand der Figuren der Zeichnung, die erfindungswesentliche Einzelheiten zeigt. Die verschiedenen Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

Es zeigen:
- Figur 1: eine isometrische Teilansicht eines ersten Gerüststiels mit einem Rohr und einem daran angeordneten Einsteckzapfen, wobei das Rohr im Kopfbereich des ersten Gerüststiels verbreitert ausgebildet ist;
- Figur 2: eine vergrößerte Teilansicht des ersten Gerüststiels aus Figur 1;
- Figur 3: eine Längsschnittansicht eines Teils des ersten Gerüststiels;
- Figur 4: eine Längsschnittansicht eines ersten Baugerüsts mit zwei aufeinander angeordneten ersten Gerüststielen; und
- Figur 5: eine Längsschnittansicht eines zweiten Baugerüsts mit aufeinander angeordneten zweiten Gerüststielen, wobei die zweiten Gerüststiele im Gegensatz zu den ersten Gerüststielen in ihrem Fußbereich verbreitert ausgebildet sind.

Die im Rahmen der vorliegenden Erfindung verwendeten Begriffe "oben", "unten", "vertikal", "horizontal" usw. beziehen sich auf den montierten Zustand des Gerüststiels bzw. den montierten Zustand des Baugerüsts.

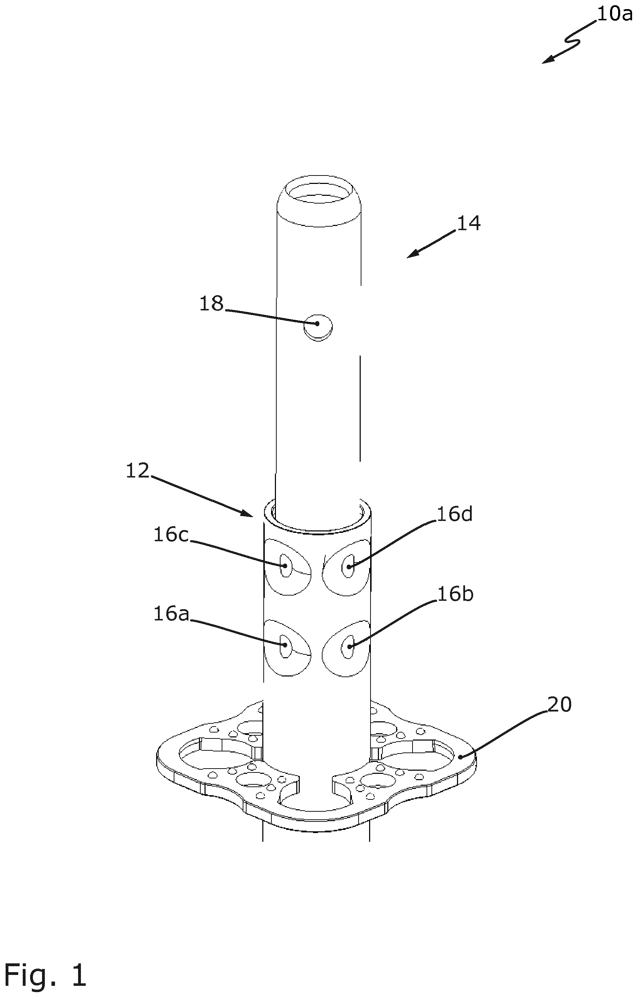

**Figur 1** zeigt einen ersten Gerüststiel **10a** mit einem vertikal ausgerichteten Rohr **12** zum Abtragen einer Last. Der erste Gerüststiel 10a weist einen einteiligen Einsteckzapfen **14** auf. Der Einsteckzapfen 14 ist radial im Inneren des Rohres 12 befestigt. Hierzu sind im Rohr 12 und im Einsteckzapfen 14 Verformungen **16a, 16b, 16c, 16d** ausgebildet. Am Einsteckzapfen 14 ist eine Sicherungsausnehmung **18** ausgebildet, um ein weiteres Gerüstbauteil (nicht gezeigt) axial unverschiebbar am ersten Gerüststiel 10a anordnen zu können. Um den ersten Gerüststiel 10a horizontal abstützen zu können, kann der erste Gerüststiel 10a eine Anschlussplatte **20,** hier in Form einer Gerüstrosette, aufweisen.

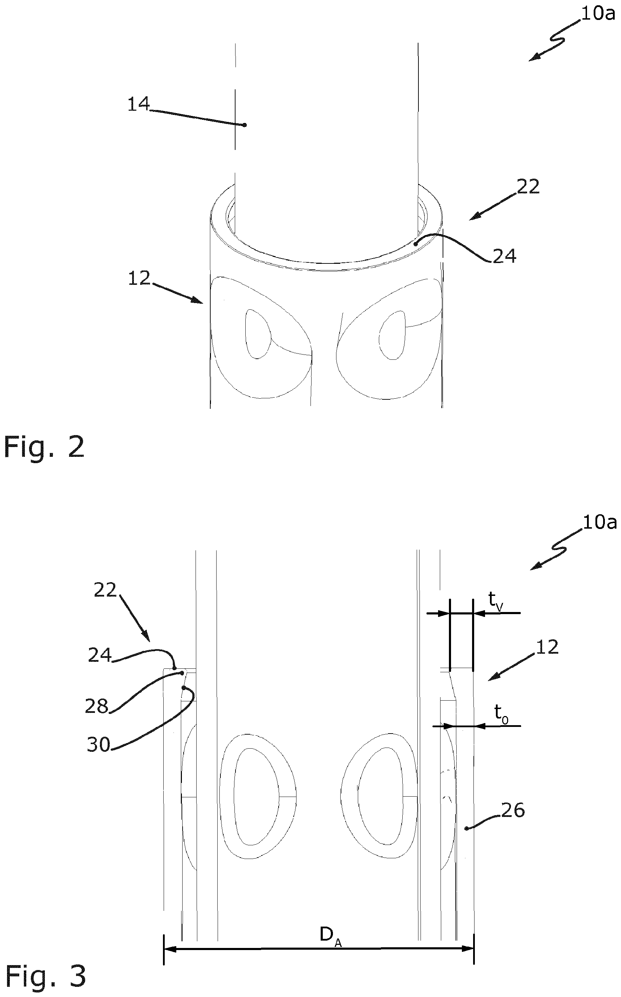

**Figur 2** zeigt den ersten Gerüststiel 10a im Bereich eines ersten axialen Endes 22 des Rohres 12. Figur 2 verdeutlicht, dass sowohl das Rohr 12 als auch der Einsteckzapfen 14 vorzugsweise jeweils eine zylinderförmige Mantelfläche aufweisen. Das erste axiale Ende **22** weist an der axialen Stirnseite des Rohres 12 eine ringförmige Anlageschulter **24** auf. Die Anlageschulter 24 ist vorzugsweise horizontal eben ausgebildet.

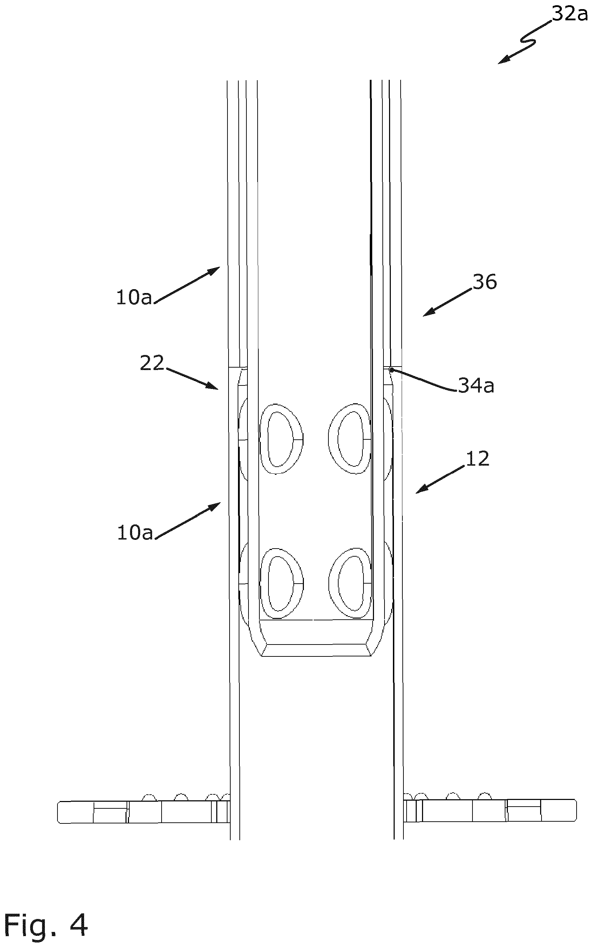

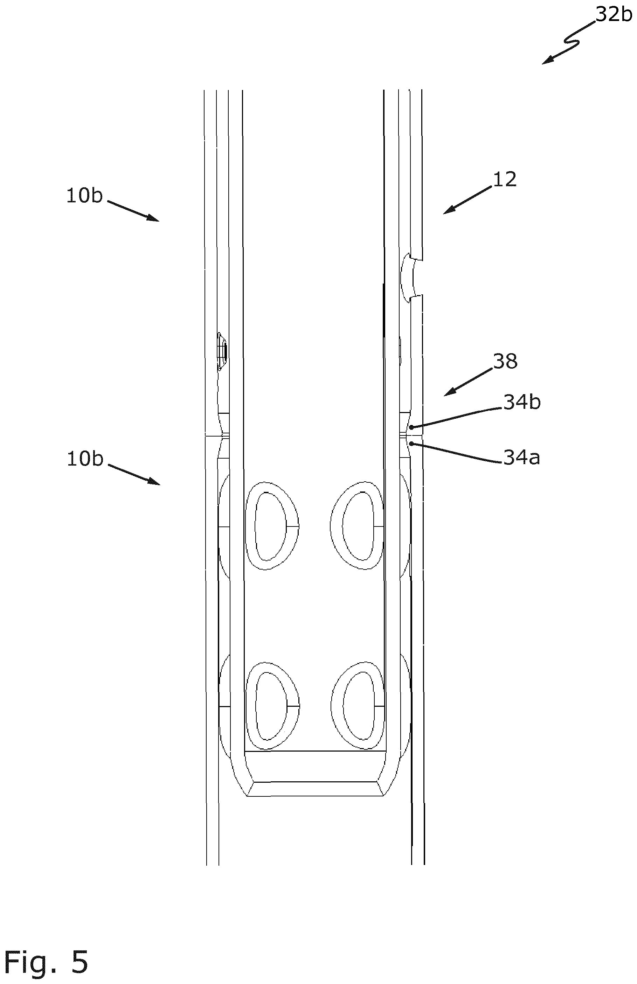

**Figur 3** zeigt den ersten Gerüststiel 10a in einer Schnittansicht. Aus Figur 3 ist ersichtlich, dass das Rohr 12 einen über seine axiale Länge gleichbleibenden Außendurchmesser **D_{A}** aufweist. Eine Rohrwand **26** des Rohres 12 weist größtenteils eine Rohrwandstärke **t₀** auf. Im Bereich der Anlageschulter 24 weist die Rohrwand 26 demgegenüber eine vergrößerte Rohrwandstärke **tᵥ** auf. Die Rohrwandstärke nimmt dabei vorzugsweise in axialer Richtung zur Anlageschulter 24 hin stetig, insbesondere linear, zu. Die Rohrwandstärke tᵥ im Bereich der Anlageschulter 24 ermöglicht eine breite bzw. großflächige Abstützung eines über dem ersten Gerüststiel 10a angeordneten weiteren Gerüststiels (nicht gezeigt; vergleiche Figuren 4 und 5). Das Rohr 12 weist am ersten axialen Ende 22 einen radialen, insbesondere nasenförmigen, Vorsprung **28** auf. Die Rohrwandstärke tᵥ geht mit einer Schräge **30** in die Rohrwandstärke t₀ über.

**Figur 4** zeigt ein erstes Baugerüst **32a** mit zwei übereinander angeordneten ersten Gerüststielen 10a. Vorzugsweise sind zumindest zwei erste Gerüststiele 10a, insbesondere alle Gerüststiel 10a, des ersten Baugerüsts 32a gleich ausgebildet. Figur 4 verdeutlicht, dass der erste Gerüststiel 10a zwar an seinem kopfseitigen ersten axialen Ende 22 des Rohres 12 eine zuvor beschriebene Verdickung **34a** aufweist, nicht jedoch in seinem Fußbereich, d. h. an seinem Aufnahmeabschnitt **36.**

**Figur 5** zeigt demgegenüber ein zweites Baugerüst **32b** mit übereinander angeordneten zweiten Gerüststielen 10b. Aus Figur 5 ist ersichtlich, dass das Rohr 12 an seinem zweiten axialen Ende **38** eine Verdickung 34b aufweist. Hierdurch wird die Lastabtragungsfähigkeit des zweiten Baugerüsts 32b gegenüber dem ersten Baugerüst 32a (siehe Figur 4) weiter erhöht. Die Verdickung 34b kann dabei - wie in Figur 5 gezeigt - spiegelbildlich zur Verdickung 34a ausgebildet sein.

Unter Vornahme einer Zusammenschau aller Figuren der Zeichnung betrifft die Erfindung zusammenfassend einen Gerüststiel 10a, 10b zum Abtragen von Vertikalbelastungen in einem Baugerüst 32a, 32b. Die effektive Länge des Gerüststiels 10a, 10b wird vorzugsweise durch ein Rohr 12 bestimmt, an dessen Innenseite einenends ein Einsteckzapfen 14 befestigt ist und das anderenends einen Aufnahmeabschnitt 36 zum Einführen eines Einsteckzapfens 14 eines gleichen Gerüststiels 10a, 10b aufweist. Im Bereich des Einsteckzapfens 14 weist das Rohr 12 vorzugsweise eine zum Einsteckzapfen 14 hin verbreiterte Rohrwandstärke tᵥ auf. Diese Verdickung 34a ist vorzugsweise nasenförmig und/oder radial beabstandet zum Einsteckzapfen 14 am Rohr 12 ausgebildet.

## Patentansprüche

1. Gerüststiel (10a, 10b) für ein Baugerüst (32a, 32b), wobei der Gerüststiel (10a, 10b) Folgendes aufweist:
a) Ein Rohr (12);
b) einen Einsteckzapfen (14), der an einem ersten axialen Ende (22) des Rohres (12) abschnittsweise axial in das Rohr (12) eingeführt und im Rohr (12) starr befestigt ist;
c) einen Aufnahmeabschnitt (36) an einem dem ersten axialen Ende (22) entgegengesetzten zweiten axialen Ende (38) des Rohres (12), wobei der Innendurchmesser des Aufnahmeabschnitts (36) größer ist als der Außendurchmesser des Einsteckzapfens (14), sodass der Einsteckzapfen (14) in einen angrenzenden Gerüststiel (10a, 10b) mit identischem Aufnahmeabschnitt (36) einsteckbar ist;
wobei das axial stirnseitige Ende des Rohres (12) im Bereich des ersten axialen Endes (22) eine, insbesondere ringförmige, Anlageschulter (24) für einen vertikal angrenzenden Gerüststiel (10a, 10b) bildet,
**dadurch gekennzeichnet, dass** sich die Rohrwand (26) des Rohres (12) im Bereich der Anlageschulter (24) zumindest abschnittsweise zum Einsteckzapfen (14) hin erstreckt, um eine große Anlagefläche für den Aufnahmeabschnitt (36) eines angrenzenden Gerüststiels (10a, 10b) zu bilden,
wobei sich die Rohrwand (26) im Bereich der Anlageschulter (24) zum Einsteckzapfen (14) hin verbreitert, wobei die Rohrwand (26) an dem axial stirnseitigen Ende des Rohres (12) eine zu der übrigen Rohrwand vergrößerte Rohrwandstärke aufweist.

2. Gerüststiel nach Anspruch 1, bei dem die Rohrwand (26) im Bereich der Anlageschulter (24) axial gestaucht ist.

3. Gerüststiel nach Anspruch 1 oder 2, bei dem der Einsteckzapfen (14) starr, im Rohr (12) befestigt ist,
wobei der Gerüststiel (10a, 10b) durch eine Verformung unbewegbar im Rohr (12) befestigt ist, wobei die Verformung bevorzugt punktförmig ausgebildet ist,
wobei besonders bevorzugt mehrere, insbesondere punktförmige, Verformungen vorgesehen sind, um den Einsteckzapfen (14) fest im Rohr (12) anzuordnen, wobei die Verformungen vorzugsweise gleich ausgebildet sind.

4. Gerüststiel nach einem der Ansprüche 1 bis 3, bei dem die Rohrwand (26) überwiegend eine Rohrwandstärke (t₀) von 2,7 mm oder 2,9 mm aufweist und im Bereich der Anlageschulter (24) eine Rohrwandstärke (tᵥ) von mehr als 3,2 mm aufweist.

5. Gerüststiel nach einem der Ansprüche 1 bis 3, bei dem die Rohrwand (26) überwiegend eine Rohrwandstärke (t₀) zwischen einschließlich 2,0 mm und einschließlich 2,6 mm aufweist und im Bereich der Anlageschulter (24) eine Rohrwandstärke (tᵥ) zwischen einschließlich 120% und einschließlich 130% der überwiegenden Rohrwandstärke (t₀) aufweist.

6. Gerüststiel nach einem der vorhergehenden Ansprüche, bei dem das Rohr (12) im ersten axialen Bereich (22) einen gleichbleibenden Außendurchmesser (D_{A}) aufweist, insbesondere bei dem das Rohr (12) über seine gesamte axiale Erstreckung denselben Außendurchmesser (D_{A}) aufweist.

7. Gerüststiel nach einem der vorhergehenden Ansprüche, bei dem der Einsteckzapfen (14) im Rohr (12) durch eine Pressverbindung, insbesondere durch eine punktförmige Verformung, vorzugsweise durch mehrere punktförmige Verformungen, befestigt ist.

8. Gerüststiel nach einem der vorhergehenden Ansprüche, bei dem das axial stirnseitige zweite Ende (38) des Rohres (12) eine, insbesondere ringförmige, Anlagefläche für die identische Anlageschulter (24) eines angrenzenden Gerüststiels (10a, 10b) aufweist, wobei sich die Rohrwand (26) des Rohres (12) im Bereich der Anlagefläche zumindest abschnittsweise radial nach innen erstreckt.

9. Baugerüst (32a, 32b) mit mehreren Gerüststielen (10a, 10b) nach einem der vorhergehenden Ansprüche, wobei ein Einsteckzapfen (14) eines ersten Gerüststiels (10a, 10b) abschnittsweise in einen Aufnahmeabschnitt (36) eines zweiten Gerüststiels (10a, 20b) eingesteckt ist.

10. Verfahren zur Herstellung eines Gerüststiels (10a, 10b) nach einem der Ansprüche 1 bis 8, mit den Verfahrensschritten:
A) Verformen eines axial stirnseitigen Endes eines Rohres (12) zur Ausbildung einer radial nach innen gerichteten Anlageschulter (24), wobei die Rohrwand (26) an dem axial stirnseitigen Ende des Rohres (12) eine zu der übrigen Rohrwand vergrößerte Rohrwandstärke aufweist;
B) Einführen und starres Befestigen eines Einsteckzapfens (14) in das Rohr (12) im Bereich der Anlageschulter (24).

11. Verfahren nach Anspruch 10, bei dem der Verfahrensschritt A) in Form eines axialen Stauchens des Endes des Rohres (12) durchgeführt wird.

## Claims

1. Scaffolding post (10a, 10b) for scaffolding (32a, 32b), wherein the scaffolding post (10a, 10b) comprises the following:
a) a tube (12);
b) an insertion pin (14) which is axially introduced into the tube (12) in portions at a first axial end (22) of the tube (12) and is fastened within the tube (12);
c) a receiving portion (36) at a second axial end (38) of the tube (12) opposite to the first axial end (22), wherein the inner diameter of the receiving portion (36) is greater than the outer diameter of the insertion pin (14), such that the insertion pin (14) can be inserted into an adjacent scaffolding post (10a, 10b) with an identical receiving portion (36);
wherein the axial end face of the tube (12) at the first axial end (22) forms, in particular, an annular abutment shoulder (24) for a vertically adjacent scaffolding post (10a, 10b),
**characterized in that** the tube wall (26) of the tube (12) extends at least partially towards the insertion pin (14) in the region of the abutment shoulder (24) to form a large contact surface for the receiving portion (36) of an adjacent scaffolding post (10a, 10b), wherein the tube wall (26) widens towards the insertion pin (14) in the region of the abutment shoulder (24), and wherein the tube wall (26) at the axial end face of the tube (12) has an increased wall thickness compared to the rest of the tube wall.

2. Scaffolding post according to claim 2, wherein the tube wall (26) is axially compressed in the region of the abutment shoulder (24).

3. Scaffolding post according to either claim 1 or claim 2, wherein the scaffolding post (10a, 10b) is immovably fixed within the tube (12) by means of a deformation, with the deformation preferably being formed as a point-shaped deformation, and particularly preferably, multiple, in particular point-shaped, deformations are provided to securely position the insertion pin (14) within the tube (12), with the deformations preferably being identically formed.

4. Scaffolding post according to either claim 1 to 3, wherein the tube wall (26) predominantly has a tube wall thickness (t₀) of 2.7 mm or 2.9 mm and has a tube wall thickness (tv) of more than 3.2 mm in the region of the abutment shoulder (24).

5. Scaffolding post according to either claim 1 to 3, wherein the tube wall (26) predominantly has a tube wall thickness (t₀) between 2.0 mm and 2.6 mm, inclusive, and has, in the region of the abutment shoulder (24), a tube wall thickness (tv) between 120% and 130%, inclusive, of the predominant tube wall thickness (t₀).

6. Scaffolding post according to any of the preceding claims, wherein the tube (12) has a constant outer diameter (D_{A}) in the first axial region (22), in particular wherein the tube (12) has the same outer diameter (D_{A}) along the entire axial extension thereof.

7. Scaffolding post according to any of the preceding claims, wherein the insertion pin (14) is fastened in the tube (12) by means of a press-fit connection, in particular by means of a punctiform deformation, preferably by means of a plurality of punctiform deformations.

8. Scaffolding post according to any of the preceding claims, wherein the second axial end-face end (38) of the tube (12) has an in particular annular abutment surface for the identical abutment shoulder (24) of an adjacent scaffolding post (10a, 10b), the tube wall (26) of the tube (12) extending radially inwardly at least in portions in the region of the abutment surface.

9. Scaffolding (32a, 32b) comprising a plurality of scaffolding posts (10a, 10b) according to any of the preceding claims, wherein an insertion pin (14) of a first scaffolding post (10a, 10b) is inserted in portions into a receiving portion (36) of a second scaffolding post (10a, 20b).

10. Method for producing a scaffolding post (10a, 10b) according to any of claims 1 to 8, comprising the following method steps:
A) deforming an axial end-face end of a tube (12) in order to form a radially inwardly directed abutment shoulder (24);
B) introducing and fastening an insertion pin (14) into the tube (12) in the region of the abutment shoulder (24).

11. Method according to claim 10, wherein the method step A) is carried out in the form of axial compression of the end of the tube (12).

## Revendications

1. Montant d'échafaudage (10a, 10b) pour un échafaudage (32a, 32b), ledit montant d'échafaudage (10a, 10b) comprenant :
a) un tube (12) ;
b) une cheville d'insertion (14) qui est introduite axialement, par sections, dans le tube (12) à une première extrémité axiale (22) du tube (12) et fixée de manière rigide à l'intérieur du tube (12) ;
c) une section de réception (36) située à une deuxième extrémité axiale (38) du tube (12), opposée à la première extrémité axiale (22), le diamètre intérieur de la section de réception (36) étant supérieur au diamètre extérieur de la cheville d'insertion (14), de sorte que la cheville d'insertion (14) puisse être insérée dans un montant d'échafaudage adjacent (10a, 10b) ayant une section de réception identique (36) ;
où l'extrémité frontale axiale du tube (12) à la première extrémité axiale (22) forme, en particulier, un épaulement de support annulaire (24) pour un montant d'échafaudage verticalement adjacent (10a, 10b),
**caractérisé en ce que** la paroi du tube (26) du tube (12) s'étend au moins partiellement vers la cheville d'insertion (14) dans la zone de l'épaulement de support (24) pour former une grande surface d'appui pour la section de réception (36) d'un montant adjacent (10a, 10b), la paroi du tube (26) s'élargissant vers la cheville d'insertion (14) dans la zone de l'épaulement de support (24), et la paroi du tube (26) à l'extrémité frontale axiale du tube (12) ayant une épaisseur de paroi accrue par rapport au reste de la paroi du tube.

2. Montant d'échafaudage selon la revendication 1, dans lequel la paroi du tube (26) est comprimée axialement dans la région de l'épaulement de support (24).

3. Montant d'échafaudage selon l'une des revendications 1 ou 2, dans lequel le montant d'échafaudage (10a, 10b) est fixé de manière immobile à l'intérieur du tube (12) par une déformation, la déformation étant préférentiellement réalisée sous forme de déformation ponctuelle, et de manière particulièrement préférée, plusieurs déformations, en particulier de forme ponctuelle, sont prévues pour positionner fermement la cheville d'insertion (14) à l'intérieur du tube (12), les déformations étant de préférence formées de manière identique.

4. Montant d'échafaudage selon l'une des revendications 1 à 3, dans lequel la paroi du tube (26) a principalement une épaisseur de paroi de tube (t0) de 2,7 mm ou de 2,9 mm et une épaisseur de paroi de tube (tV) de plus de 3,2 mm dans la région de l'épaulement de support (24).

5. Montant d'échafaudage selon l'une des revendications 1 à 3, dans lequel la paroi du tube (26) a principalement une épaisseur de paroi de tube (t0) comprise entre 2,0 mm et 2,6 mm, inclus, et dans lequel la paroi du tube a, dans la région de l'épaulement de support (24), une épaisseur de paroi de tube (tV) comprise entre 120 % et 130 %, inclus, de l'épaisseur de paroi de tube principale (t0).

6. Montant d'échafaudage selon l'une des revendications précédentes, dans lequel le tube (12) a un diamètre extérieur constant (DA) dans la première région axiale (22), en particulier dans lequel le tube (12) a le même diamètre extérieur (DA) sur toute son extension axiale.

7. Montant d'échafaudage selon l'une des revendications précédentes, dans lequel la cheville d'insertion (14) est fixée dans le tube (12) par un ajustement par pression, en particulier par une déformation ponctuelle, de préférence par une pluralité de déformations ponctuelles.

8. Montant d'échafaudage selon l'une des revendications précédentes, dans lequel la deuxième extrémité axiale frontale (38) du tube (12) présente une surface d'appui annulaire pour l'épaulement de support identique (24) d'un montant adjacent (10a, 10b), la paroi du tube (26) s'étendant radialement vers l'intérieur au moins par sections dans la région de la surface d'appui.

9. Échafaudage (32a, 32b) comprenant une pluralité de montants d'échafaudage (10a, 10b) selon l'une des revendications précédentes, dans lequel une cheville d'insertion (14) d'un premier montant d'échafaudage (10a, 10b) est insérée partiellement dans une section de réception (36) d'un deuxième montant d'échafaudage (10a, 10b).

10. Procédé de fabrication d'un montant d'échafaudage (10a, 10b) selon l'une des revendications 1 à 8, comprenant les étapes suivantes :
a) déformer une extrémité frontale axiale d'un tube (12) pour former un épaulement de support dirigé radialement vers l'intérieur (24) ;
b) introduire et fixer une cheville d'insertion (14) dans le tube (12) dans la région de l'épaulement de support (24).

11. Procédé selon la revendication 10, dans lequel l'étape a) est réalisée sous forme de compression axiale de l'extrémité du tube (12).
